# FASCICULE DE BREVET EUROPEEN

(11) **EP 1 852 316 B1**
(45) Date de publication et mention de la délivrance du brevet: **29.02.2012**
(21) Numéro de dépôt: 07300996.1
(22) Date de dépôt: 26.04.2007
(51) Int. Cl.: B60R 19/24

(54) **Véhicule comprenant une armature servant de support à un pare-chocs**
Fahrzeug mit einem Gestell, das als Halterung für einen Stoßdämpfer dient
Vehicle comprising a frame providing a support for a bumper.

(30) Priorité: 04.05.2006 FR 0651588
(43) Date de publication de la demande: 07.11.2007
(73) Titulaire: Peugeot Citroën Automobiles SA, 78140 Vélizy-Villacoublay (FR)
(72) Inventeur: De Zutter, Edouard, 90110 Rougement le Chateau (FR)

(56) Documents cités:
- WO-A-02/36414
- WO-A1-2009/013416
- WO-A2-03/104030
- DE-A1- 19 847 389
- FR-A1- 2 784 064
- FR-A1- 2 816 577
- JP-A- 2004 203 238
- US-A- 3 926 463
- US-A1- 2005 116 498
- US-A1- 2005 218 699

## Description

L'invention se rapporte à un véhicule comprenant une armature servant de support à un pare-chocs.

L'invention concerne plus particulièrement un véhicule comprenant une structure comportant deux longerons et une traverse, la traverse est fixée par ses extrémités aux deux longerons. Le véhicule comporte également une armature support, s'étendant au-dessus de la traverse, destinée à recevoir un pare-chocs comme décrit dans le document WO 01/00478.

De tels véhicules sont déjà connus dans l'art antérieur. En utilisation courante, ils sont tout à fait satisfaisants ; mais, en cas de choc et notamment en cas de choc avec un piéton, il est fréquent que l'armature support s'affaisse en direction de la traverse, ce qui entraîne également le pare-chocs. Ceci augmente les risques de blessures du piéton qui peut alors heurter certains éléments de structure ou des équipements disposés derrière le pare-chocs du véhicule.

Un but de la présente invention est de pallier tout ou partie des inconvénients de l'art antérieur relevés ci-dessus.

A cette fin, le véhicule selon l'invention, par ailleurs conforme à la définition générique qu'en donne le préambule ci-dessus, est essentiellement caractérisé en ce qu'entre l'armature support et la traverse sont interposés des moyens de maintien destinés à limiter l'affaissement de l'armature sur la traverse en cas de choc.

Par ailleurs, l'invention peut comporter l'une ou plusieurs des caractéristiques suivantes :
- les moyens de maintien peuvent appartenir à l'armature,
- les moyens de maintien peuvent être venus de matière avec le corps de l'armature,
- les moyens de maintien peuvent comprendre au moins une jambe,
- la jambe peut s'étendre de façon sensiblement perpendiculaire à l'axe longitudinal du véhicule,
- la jambe peut comporter une surface d'appui, destinée à reposer sur la partie supérieure de la traverse, prolongée par une patte en saillie venant en butée contre un côté latéral de la traverse,
- les moyens de maintien peuvent comprendre deux jambes,
- l'armature peut posséder un axe de symétrie vertical, et les moyens de maintien peuvent alors comprendre deux jambes positionnées sensiblement de part de d'autre de l'axe de symétrie de l'armature,
- les extrémités de l'armature peuvent être chacune fixées sur des platines de support permettant de fixer la traverse aux longerons.

D'autres particularités et avantages apparaîtront à la lecture de la description ci-après faite en référence aux figures dans lesquelles :
- la figure 1 représente une vue en perspective de la façade avant d'un véhicule automobile,
- la figure 2 représente une vue identique à la figure 1, la façade étant dépourvue de ses projecteurs et de son pare-chocs,
- les figures 3 et 4 montrent des détails de la fixation de l'armature de pare-chocs, supportant le pare-chocs représenté à la figure 1, respectivement sur un élément de liaison fixé à la structure du véhicule et sur une platine destinée à supporter la poutre de pare-chocs,

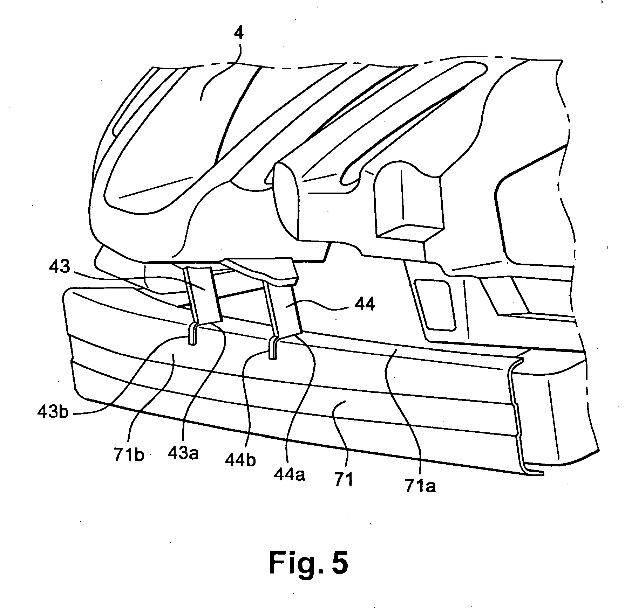

- la figure 5 représente une vue en perspective de la zone encerclée A à la figure 2.

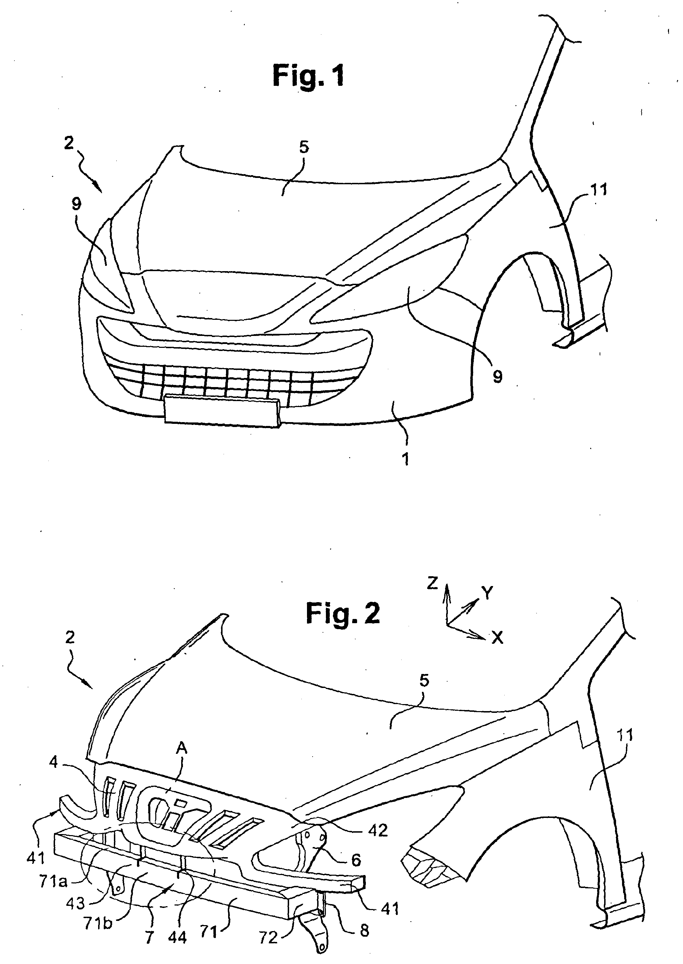

La figure 1 représente la façade avant 2 d'un véhicule automobile, qui comprend de façon classique, un pare-chocs 1 en matière plastique, des ailes latérales 11, un capot 5 et des projecteurs 9.

La partie supérieure du pare-chocs 1 est fixée sur une armature 4, communément appelée « armature de pare-chocs ». La partie inférieure du pare-chocs 1 est supportée par une poutre de pare-chocs 7 (voir la figure 2).

La poutre de pare-chocs 7 comprend :
- une traverse 71 qui s'étend transversalement au véhicule et
- deux branches longitudinales 72, qui prolongent la traverse 71 vers l'arrière au voisinage de ses extrémités latérales, et qui se terminent par des platines 8 de fixation aux longerons (non représentés), appartenant à la structure du véhicule. Chaque branche longitudinale 72 comprend un absorbeur d'énergie.

L'armature 4 est une pièce en matière plastique, possédant un axe de symétrie vertical. L'armature 4 s'étend au-dessus de la traverse 71. Ses extrémités latérales servent de support et permettent la fixation des projecteurs 9. Ses extrémités comportent notamment
- une branche 41 destinée à recevoir la partie inférieure du projecteur 9 et
- une paroi latérale 42 destinée à recevoir une partie d'une paroi latérale du projecteur 9.

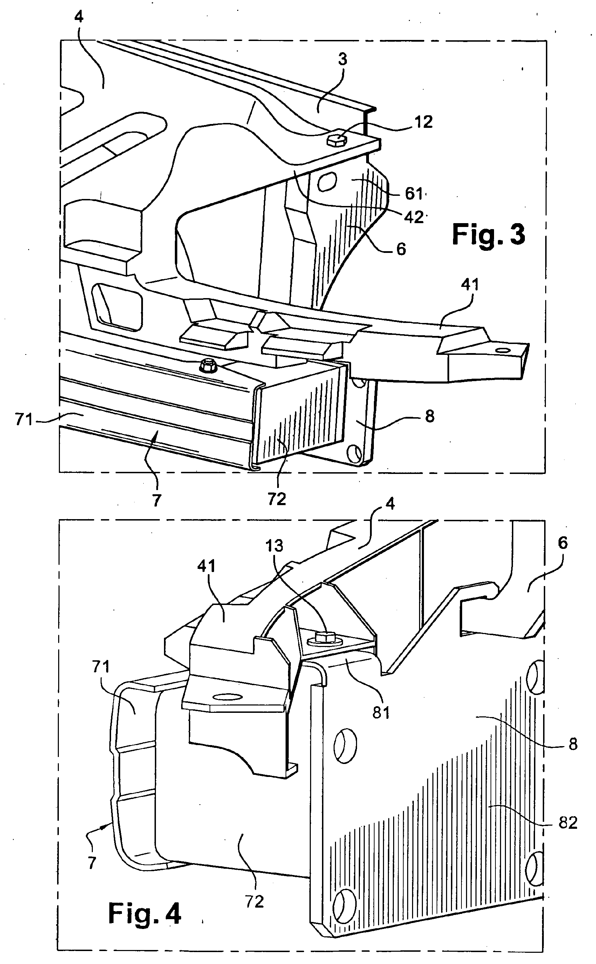

Chaque branche 41 est fixée sur une patte 81 appartenant à la platine 8 (voir la figure 4), par exemple, au moyen de vis 13. Cette patte 81 est recourbée et est positionnée de façon sensiblement perpendiculaire au corps 82 de l'armature 8.

Chaque extrémité de la paroi latérale 42 est fixée sur l'extrémité 61 d'un élément de liaison 6 positionné sur la structure du véhicule, par exemple au moyen de vis 12 (voir la figure 3). Cet élément 6 de liaison est communément appelé « équerre appui de façade », il permet également de positionner une pièce transversale 3 supportant des éléments de refroidissement du moteur du véhicule, communément appelée « façade technique », par rapport à la structure du véhicule. La partie supérieure de l'armature 4 est également fixée sur la façade technique 3.

Les fixations de la branche 41 sur la platine 8 et de l'extrémité de la paroi latérale 42 sur l'équerre appui de façade 6 permettent d'assurer la stabilité géométrique de l'armature 4, notamment en cas de fort ensoleillement. Elles contribuent également à sa stabilité en cas de choc.

Selon l'invention, l'armature 4 comprend dans sa partie inférieure deux jambes 43, 44 s'étendant, selon l'axe Z, de façon sensiblement perpendiculaire à l'axe longitudinal du véhicule. Ces jambes 43, 44 sont venus de matière avec le corps de l'armature 4, mais elles peuvent également être des pièces rapportées fixées sur le corps de l'armature.

Les jambes 43, 44 sont positionnées dans la partie centrale de l'armature 4, de préférence, de part et d'autre de l'axe de symétrie de l'armature 4. Elles sont destinées à venir en appui sur la traverse 71. Ainsi, les jambes 43, 44 sont également positionnées de part et d'autre de l'axe de symétrie vertical de la traverse 71.

Chaque jambe 43, 44 possède une surface d'appui 43a, 44a, destinée à reposer sur la partie supérieure de la traverse 71a, prolongée par une patte 43b, 44b en saillie venant en butée contre le côté latéral de la traverse 71 b, orienté du côté du pare-chocs 1.

Grâce à l'invention, l'armature 4 est en appui sur la traverse 71, ce qui amène de la raideur dans la zone située entre la traverse 71 et l'armature 4. Ainsi, en cas de chocs avec un piéton ou de chocs à faible vitesse, les jambes 43, 44 limitent l'affaissement prématuré de l'armature 4 sur la traverse 71 ; les jambes 43, 44 jouent alors un rôle d'absorbeur en complément du pare-chocs.

Bien sûr, l'invention s'applique également à d'autres moyens de maintien interposés entre l'armature 4 et la traverse 71. Ces moyens peuvent bien sûr comprendre une seule jambe, celle-ci devra alors être située sensiblement sur l'axe de symétrie vertical de l'armature.

## Revendications

1. Véhicule comprenant
- une structure comportant deux longerons et une traverse (71), ladite traverse (71) venant se fixer par ses extrémités aux deux longerons, et
- une armature (4) support s'étendant au-dessus de ladite traverse (71), destinée à recevoir un pare-chocs (1),
**caractérisé en ce qu'**entre ladite armature (4) support et ladite traverse (71) sont interposés des moyens de maintien (43, 44) destinés à limiter l'affaissement de l'armature (4) sur la traverse (71) en cas de choc, lesdits moyens de maintien comprenant au moins une jambe (43, 44) s'étendant de façon sensiblement perpendiculaire à l'axe longitudinal du véhicule.

2. Véhicule selon la revendication 1, **caractérisé en ce que** les moyens de maintien (43, 44) appartiennent à l'armature (4).

3. Véhicule selon la revendication 2, **caractérisé en ce que** les moyens de maintien (43, 44) sont venus de matière avec le corps de l'armature (4).

4. Véhicule selon l'une quelconque des revendications 1 à 3, **caractérisé en ce que** la jambe (43, 44) comporte une surface d'appui (43a, 44a), destinée à reposer sur la partie supérieure de la traverse (71 a), prolongée par une patte (43b, 44b) en saillie venant en butée contre un côté latéral de la traverse (71 b).

5. Véhicule selon l'une quelconque des revendications 1 à 4, **caractérisé en ce que** les moyens de maintien comprennent deux jambes (43, 44).

6. Véhicule selon la revendication 5, **caractérisé en ce que** l'armature (4) possède un axe de symétrie vertical, et **en ce que** les moyens de maintien comprennent deux jambes (43, 44) positionnées sensiblement de part de d'autre de l'axe de symétrie de l'armature (4).

7. Véhicule selon l'une quelconque des revendications 1 à 6, **caractérisé en ce que** les extrémités (41) de ladite armature (4) sont chacune fixées sur des platines (8) de support permettant de fixer la traverse (71) aux longerons.

## Claims

1. Vehicle comprising
- a structure having two side rails and a transverse member (71), said transverse member (71) being fixed by the ends thereof to the two side rails, and
- a support frame (4) extending above said transverse member (71) and intended to receive a bumper (1),
**characterised in that** holding means (43, 44), intended to limit the collapse of the frame (4) onto the transverse member (71) in case of impact, are positioned between said support frame (4) and said transverse member (71), said holding means comprising at least one limb (43, 44) extending substantially perpendicular to the longitudinal axis of the vehicle.

2. Vehicle according to claim 1, **characterised in that** the holding means (43, 44) are part of the frame (4).

3. Vehicle according to claim 2, **characterised in that** the holding means (43, 44) are formed integrally with the body of the frame (4).

4. Vehicle according to any one of claims 1 to 3, **characterised in that** the limb (43, 44) has a contact surface (43a, 44a), intended to rest on the upper part of the transverse member (71 a) and extended by a foot (43b, 44b) which projects so as to abut against a side face of the transverse member (71 b).

5. Vehicle according to any one of claims 1 to 4, **characterised in that** the holding means comprise two limbs (43, 44).

6. Vehicle according to claim 5, **characterised in that** the frame (4) has a vertical axis of symmetry, and **in that** the holding means comprise two limbs (43, 44) positioned substantially on either side of the axis of symmetry of the frame (4).

7. Vehicle according to any one of claims 1 to 6, **characterised in that** the ends (41) of said frame (4) are each fixed to support panels (8) which make it possible to fix the transverse member (71) to the side rails.

## Patentansprüche

1. Fahrzeug, umfassend:
- eine Struktur, die zwei Längsträger und einen Querträger (71) aufweist, wobei der Querträger (71) an seinen Enden an den beiden Längsträgern befestigt wird, und
- eine über dem Querträger (71) verlaufende Trägerkonstruktion (4), die dafür bestimmt ist, einen Stoßfänger (1) aufzunehmen,
**dadurch gekennzeichnet, dass** zwischen der Trägerkonstruktion (4) und dem Querträger (71) Haltemittel (43, 44) angeordnet sind, die dafür bestimmt sind, das Absenken der Konstruktion (4) auf den Querträger (71) bei einem Aufprall einzuschränken, wobei die Haltemittel mindestens ein Bein (43, 44) umfassen, das im Wesentlichen senkrecht zur Längsachse des Fahrzeugs verläuft.

2. Fahrzeug nach Anspruch 1, **dadurch gekennzeichnet, dass** die Haltemittel (43, 44) zur Konstruktion (4) gehören.

3. Fahrzeug nach Anspruch 2, **dadurch gekennzeichnet, dass** die Haltemittel (43, 44) einstückig mit dem Körper der Konstruktion (4) gebildet sind.

4. Fahrzeug nach einem der vorhergehenden Ansprüche 1 bis 3, **dadurch gekennzeichnet, dass** das Bein (43, 44) eine Auflagefläche (43a, 44a) aufweist, die dafür bestimmt ist, auf dem oberen Teil des Querträgers (71 a) aufzuliegen und mit einem überstehenden Fuß (43b, 44b) verlängert ist, der an einer Querseite des Querträgers (71 b) zur Anlage kommt.

5. Fahrzeug nach einem der vorhergehenden Ansprüche 1 bis 4, **dadurch gekennzeichnet, dass** die Haltemittel zwei Beine (43, 44) umfassen.

6. Fahrzeug nach Anspruch 5, **dadurch gekennzeichnet, dass** die Konstruktion (4) eine senkrechte Symmetrieachse besitzt und dass die Haltemittel zwei Beine (43, 44) umfassen, die im Wesentlichen auf beiden Seiten der Symmetrieachse der Konstruktion (4) angeordnet sind.

7. Fahrzeug nach einem der vorhergehenden Ansprüche 1 bis 6, **dadurch gekennzeichnet, dass** die Enden (41) der Konstruktion (4) jeweils an Halteplatten (8) befestigt sind, mit denen der Querträger (71) an den Längsträgern befestigt werden kann.
